# EUROPÄISCHE PATENTSCHRIFT

(11) **EP 3 058 829 B1**
(45) Veröffentlichungstag und Bekanntmachung des Hinweises auf die Patenterteilung: **31.10.2018**
(21) Anmeldenummer: 15155995.2
(22) Anmeldetag: 20.02.2015
(51) Int. Cl.: A22C 25/12, A22C 25/08

(54) **Vorrichtung zum Positionieren und Ausrichten von Fischkörpern**
Device for positioning and aligning fish bodies
Dispositif de positionnement et d'alignement de corps de poissons

(43) Veröffentlichungstag der Anmeldung: 24.08.2016
(73) Patentinhaber: NORDISCHER MASCHINENBAU RUD. BAADER GMBH + CO KG, 23560 Lübeck (DE)
(72) Erfinder: Dann, Andreas, DE-23569 Lübeck (DE)
(74) Vertreter: Stork Bamberger Patentanwälte PartmbB

(56) Entgegenhaltungen:
- DE-A1-102005 025 482
- DE-B1- 3 016 446
- DE-C1- 3 125 412
- US-A- 2 541 046
- US-A- 2 649 613

## Beschreibung

Die vorliegende Erfindung betrifft eine Vorrichtung zum Positionieren und Ausrichten von Fischkörpern, umfassend eine Fördereinrichtung mit muldenförmigen Aufnahmeelementen zur Einzelaufnahme jeweils eines der Fischkörper und zum Fördern der Fischkörper quer zu ihrer Längsachse in eine Förderrichtung, eine zum Positionieren mittels Verschieben der Fischkörper in eine Verschieberichtung eingerichtete Positioniereinrichtung, wobei die Verschieberichtung quer zu der Förderrichtung verläuft, wobei die Positioniereinrichtung ein Schiebeelement zum Verschieben der Fischkörper und eine Schiebeelementaufnahme umfasst, wobei das Schiebeelement an der Schiebeelementaufnahme um wenigstens eine Achse aus einer Ruhelage schwenkbar angeordnet ist, und wobei die Schiebeelementaufnahme in der Verschieberichtung bewegbar ausgebildet und eingerichtet ist. Des Weiteren betrifft die vorliegende Erfindung eine Vorrichtung zum Abtrennen des Schwanzes von kopflosen Fischkörpern.

Derartige Vorrichtungen finden insbesondere bei der automatisierten Verarbeitung von Fischen Anwendung, beispielsweise beim Trennen der Kopf- bzw. Schwanzbereiche vom restlichen Fischkörper.

Im Dokument DE 31 25 412 C1 ist eine solche gattungsgemäße Vorrichtung für die Positionierung von Fischen beschrieben, um diese in eine zum Köpfen gewünschte Lage zu bringen. Die Positionierung erfolgt mittels eines Verschiebeelements, das über eine an einem Kurbelarm eines Schrittmotors angeordnete Schubstange verschiebbar ist.

Die bekannte Vorrichtung weist den Nachteil auf, dass aufgrund der Antriebsart des Verschiebeelements nach dem Positionieren eines Fischkörpers das Verschiebeelement zunächst in seine Ausgangsposition zurückläuft, bevor der nächste Verschiebevorgang beginnen kann. Zudem werden die mechanischen Komponenten der Positioniervorrichtung aufgrund des Richtungswechsels des Verschiebeelements stark belastet, was sich im Ergebnis negativ auf die Standzeit auswirkt. Aufgrund der vorgenannten Effekte ist eine Steigerung der Durchsatzleistung der Gesamtmaschine, d. h. die Anzahl der pro Zeiteinheit bearbeitbaren Fischkörper, beschränkt.

Aus dem Dokument US 2 649 613 A ist eine Vorrichtung zum Positionieren von Fischen bekannt. Mittels eines Schiebeelements, das über einen Stab hin- und hergeschwenkt wird, werden die Fische für die weitere Bearbeitung entsprechend positioniert.

Die Aufgabe der vorliegenden Erfindung besteht daher darin eine Vorrichtung zum Positionieren und Ausrichten von Fischkörpern zu schaffen, die ein präzises Positionieren der Fischkörper, insbesondere bei großer Durchsatzleistung, bei zugleich langen Standzeiten ermöglicht.

Die Aufgabe wird durch eine Vorrichtung gemäß Anspruch 1 dadurch gelöst, dass die Positioniereinrichtung ein Schiebeelement zum Verschieben der Fischkörper und eine Schiebeelementaufnahme umfasst, wobei das Schiebeelement an der Schiebeelementaufnahme um wenigstens eine Achse aus einer Ruhelage schwenkbar angeordnet ist, und wobei die Schiebeelementaufnahme in der Verschieberichtung bewegbar ausgebildet und eingerichtet ist. Mit anderen Worten ist das Schiebeelement mindestens in zwei Freiheitsgraden bewegbar ausgebildet und eingerichtet. Einerseits ist das Schiebeelement relativ zu der Schiebeelementaufnahme schwenkbar ausgebildet und andererseits durch die in die Verschieberichtung bewegbar eingerichtete Schiebeelementaufnahme insgesamt translatorisch bewegbar ausgebildet. Weitergehend umfasst die Positioniereinrichtung magnetische Rückstellmittel, die derart eingerichtet und ausgebildet sind, dass diese beim Verschieben des Fischkörpers eine in die Verschieberichtung wirkende Rückstellkraft auf das Schiebeelement ausüben. Die magnetischen Rückstellmittel sind dabei vorzugsweise so ausgebildet, dass diese das Schiebeelement während des Verschiebens der Fischkörper in der Ruhelage halten. Vorteilhafter Weise kann so der Fischkörper mittels des Schiebeelements in die Verschieberichtung verschoben werden. Sofern der Fischkörper bzw. das Schiebeelement die jeweils vorgesehene Position erreicht hat, kann das Schiebeelement entgegen der Verschieberichtung durch Schwenken um die wenigstens eine Achse aus der Ruhelage ausweichen. Die magnetischen Rückstellmittel lassen ein Auslenken des Schiebeelements in der Schiebestellung durch eine Schwenkbewegung relativ zu der Schiebeelementaufnahme zu, so dass die Fischkörper mit einer definierten vorgegebenen Maximalkraft in der Verschieberichtung verschoben werden.

Überschreitet die zum Verschieben erforderliche Kraft einen vorgegebenen Schwellwert und damit die mittels der magnetischen Rückstellmittel erzeugte Rückstellkraft, schwenkt das Schiebeelement soweit, dass dieses im Wesentlichen kräftefrei über den Fischkörper gleitet und so der Verschiebevorgang beendet ist. Hierdurch wird die Krafteinwirkung beim Erreichen der vorgegebenen Position auf den Fischkörper wesentlich reduziert, so dass das Schiebeelement im Wesentlichen frei in einer Schwenkstellung über den Fischkörper gleitet. Auf diese Weise wird auf der einen Seite eine präzise Positionierung des jeweiligen Fischkörpers erreicht und zum anderen aufgrund des Zurückweichens des Schiebeelements durch die zuvor beschriebene Schwenkbewegung relativ zu der Schiebeelementaufnahme eine mechanische Belastung sämtlicher Komponenten der Positioniereinrichtung weitestgehend minimiert, so dass die erfindungsgemäße Positioniereinrichtung lange Standzeiten erreicht. Des Weiteren werden Verletzungen des Fischkörpers durch das Schiebeelement wirksam verhindert. Die Längsachse der Fischkörper bezeichnet diejenige Achse eines Fisches bzw. des Fischkörpers, die in Kopf-Schwanz-Richtung verläuft. Ein wesentlicher Vorteil des magnetischen Rückstellmittels besteht darin, dass die magnetischen Rückstellmittel derart eingerichtet sind, dass die Rückstellkraft auf Basis von Magnetfeldern erzeugt wird. Die magnetischen Rückstellmittel unterliegen daher keinen Verschleiß- oder Abnutzungserscheinungen und sind vollständig wartungsfrei. Auf diese Weise werden lange Standzeiten der gesamten erfindungsgemäßen Vorrichtung erzielt. Ein weiterer Vorteil besteht darin, dass als Rückstellmittel keine Federelemente erforderlich sind, deren Reinigung sich im Hinblick auf den bei der Verarbeitung von Lebensmitteln erforderlichen hohen Hygienestandard mit großem Aufwand verbunden ist.

Eine bevorzugte Weiterbildung der Erfindung zeichnet sich dadurch aus, dass die magnetischen Rückstellmittel mindestens ein erstes magnetisches Element und ein zweites magnetisches Element umfassen, wobei das erste magnetische Element an dem Schiebeelement und das zweite magnetische Element an der Schiebeelementaufnahme derart angeordnet sind, dass sich in der Ruhelage jeweils ungleichnamige Pole des ersten magnetischen Elements und des zweiten magnetischen Elements berührungsfrei zumindest im Wesentlichen gegenüberstehen. Das mindestens eine erste magnetische Element sowie das mindestens eine zweite magnetische Element umfassen jeweils Dauermagnete und/oder Elektromagnete. Besonders bevorzugt sind die Dauermagnete als Neodym-Magnete ausgebildet. Weiter bevorzugt als vernickelte Neodym-Magnete. Die ersten und zweiten magnetischen Elemente sind vorzugsweise jeweils in Gegenüberstellung an dem Schiebeelement und der Schiebeelementaufnahme angeordnet und zwar derart, dass diese sich in der Ruhelage des Schiebeelements einander unmittelbar gegenüberstehen. Alternativ sind die ersten und zweiten magnetischen Elemente leicht versetzt, d. h. nicht in unmittelbarer Gegenüberstellung, angeordnet. Die ersten und zweiten magnetischen Elemente sind ferner jeweils so angeordnet, dass sich jeweils ungleichnamige Pole, also beispielsweise ein Nordpol des ersten magnetischen Elements einem Südpol des zweiten magnetischen Elements oder ein Südpol des ersten magnetischen Elements einem Nordpol des zweiten magnetischen Elements, gegenüberstehen. So wird erreicht, dass sich jeweils das erste magnetische Element und das zweite magnetische Element in einem gewissen Schwenkbereich um die Ruhelage gegenseitig anziehen und so die zuvor genannte Rückstellkraft auf das Schiebeelement ausüben.

Gemäß einer weiter bevorzugten Ausbildung der Erfindung umfasst das Schiebeelement ein erstes Lagerelement und die Schiebeelementaufnahme ein zweites Lagerelement, wobei die Lagerelemente jeweils Ausnehmungen zur Aufnahme einer Schwenkachse umfassen, mittels derer die ersten und zweiten Lagerelemente um die wenigstens eine Achse schwenkbar angeordnet sind. Die vorgenannten Lagerelemente sind folglich angepasst, das Schiebeelement mit der Schiebeelementaufnahme schwenkbar zu verbinden und stellen eine kompakte, leicht zu reinigende Einheit dar.

Eine weitere zweckmäßige Ausbildung der Erfindung ist dadurch gekennzeichnet, dass das erste Lagerelement zumindest im Wesentlichen als U-Profil mit zwei Seitenteilen und einem Basisteil ausgebildet ist, wobei die Seitenteile jeweils das zweite Lagerelement an dessen Seitenflächen zumindest teilweise umgreifen. Dies bietet den Vorteil, dass die Positioniereinrichtung insgesamt möglichst kompakt ist und aufgrund der wenig komplexen Geometrie leicht zu reinigen ist.

Gemäß einer weiteren bevorzugten Ausführungsform umfasst mindestens eines der Seitenteile mindestens eine erste Aufnahme zur Aufnahme des ersten magnetischen Elements, wobei das erste magnetische Element mindestens einen ersten Stabmagnet umfasst, der mit seiner längsten Symmetrieachse parallel zu der Schwenkachse ausgerichtet angeordnet ist. So kann das magnetische Element auf besonders einfache Weise an dem mindestens ersten der Seitenteile angeordnet werden. Vorzugsweise ist das erste magnetische Element formschlüssig in der ersten Aufnahme angeordnet. Zusätzlich oder alternativ ist jedoch auch eine kraftschlüssige Verbindung vorteilhaft.

Eine weitere zweckmäßige Ausgestaltung der Erfindung ist dadurch gekennzeichnet, dass das zweite Lagerelement mindestens eine zweite Aufnahme zur Aufnahme des zweiten magnetischen Elements umfasst, wobei das zweite magnetische Element einen zweiten Stabmagnet umfasst, der mit seiner längsten Symmetrieachse parallel zu der Schwenkachse ausgerichtet angeordnet ist. Die im Zusammenhang mit der ersten Aufnahme genannten Vorzüge gelten analog für die zweite Aufnahme, so dass zur Vermeidung von Wiederholungen auf die zuvor genannten Vorteile verwiesen wird.

Gemäß einer weiteren vorteilhaften Ausgestaltung der Erfindung erstreckt sich der zweite Stabmagnet zumindest im Wesentlichen über die Breite des zweiten Lagerelements von einer der Seitenflächen zu der jeweils anderen der Seitenflächen. Dies bietet den Vorteil, dass das zweite magnetische Element mittels nur eines einzigen zweiten Stabmagnets gebildet wird. Über die Wahl der Länge des zweiten Stabmagnets und den sich daraus in der Ruhelage ergebenden Abstand zwischen den Polen des zweiten Stabmagnets und den jeweils gegenüberstehenden ersten Stabmagnet ist es möglich, die Maximalgröße der Rückstellkraft vorzuwählen.

Eine weitere zweckmäßige Ausgestaltung der Erfindung zeichnet sich dadurch aus, dass jedes der Seitenteile des ersten Lagerelements die ersten Aufnahmen zur Aufnahme jeweils der ersten magnetischen Elemente umfassen, wobei die ersten magnetischen Elemente jeweils die ersten Stabmagnete umfassen, die jeweils mit ihrer längsten Symmetrieachse parallel zu der Schwenkachse ausgerichtet angeordnet sind. Mittels der beidseitig angeordneten ersten Aufnahmen wird eine gleichmäßige Krafteinleitung auf beiden Seiten des ersten Lagerelements gewährleistet.

Vorteilhafter Weise umfasst das zweite magnetische Element zwei gegenpolig ausgerichtete zweite Stabmagnete, die mittels der zweiten Aufnahmen des zweiten Lagerelements mit ihrer längsten Symmetrieachse parallel zu der Schwenkachse ausgerichtet angeordnet sind, wobei die ersten Aufnahmen der ersten Lagerelemente zur Aufnahme von jeweils zwei der ersten Stabmagnete in jedem der Seitenteile derart eingerichtet sind, dass jedem der gegenpolig ausgerichteten Stabmagnete an jeder der Seitenflächen jeweils zwei der ersten Stabmagnete berührungsfrei zumindest im Wesentlichen gegenüberstehen. Die genannte Anordnung der gegenpolig ausgerichteten zweiten Stabmagnete biete den Vorteil eines Rückstellkraftverlaufs, der mit zunehmender Auslenkung des Schiebeelements aus der Ruhelage zunächst mit einer Abnahme der Größe der Rückstellkraft einhergeht. Die Rückstellkraft nimmt bei einer vorgegebenen Auslenkung ein Minimum an, um dann bei weiterer Auslenkung aufgrund der einsetzenden Abstoßung wieder zuzunehmen. Zur Funktionsweise sowie zu den weiteren Details wird auf die entsprechenden Abschnitte der Figurenbeschreibung verwiesen.

Weiter bevorzugt umfasst die erfindungsgemäße Vorrichtung einen oberhalb der Fördereinrichtung angeordneten Endlosförderer, wobei an dem Endlosförderer mindestens eine der Schiebeelementaufnahmen angeordnet ist und der Endlosförderer zum Verschieben der mindestens einen Schiebeelementaufnahme in Verschieberichtung ausgebildet und eingerichtet ist. Dies bietet den Vorteil, dass aufgrund des Endlosförderers die Schiebeelemente bzw. die Schiebeelementaufnahmen kontinuierlich mit im laufenden Betrieb konstanter Geschwindigkeit umlaufend gefördert werden, so dass hohe Verschiebegeschwindigkeiten und damit insgesamt eine rasche Positionierung der Fischkörper erzielt werden kann. Auf diese Weise wird die Gesamtdurchsatzleistung wesentlich gesteigert.

Vorteilhafter Weise ist der Endlosförderer gegenüber der Förderrichtung unter Schrägstellung mit einem Vorhaltewinkel größer 0° und kleiner 90° zwischen der Verschieberichtung und der Förderrichtung angeordnet. Die Schrägstellung bewirkt ein "Mitlaufen" des Schiebeelements bzw. der Schiebeelementaufnahme in die Förderrichtung, so dass die Geschwindigkeitskomponente des Schiebeelements in der Förderrichtung der Fördergeschwindigkeit der Fördereinrichtung entspricht.

Vorzugsweise ist an dem Endlosförderer ein Anschlags- und Führungselement angeordnet, dass derart ausgebildet und eingerichtet ist, dass das Schiebeelement an einer vorgegebenen Endposition unter Zwangsführung aus der Ruhelage oder der Schiebestellung in eine Umlenkstellung geschwenkt wird. Auf diese Weise wird sowohl die vorgegebene Endposition für das Positionieren der Fischkörper vorgegeben, als auch eine andernfalls mögliche Kollision des Schiebeelements mit weiteren Komponenten der Vorrichtung zuverlässig vermieden.

Bevorzugt ist der Abstand zwischen dem Anschlags- und Führungselement zur Wahl der vorgegebenen Endposition variabel einstellbar ausgebildet. Dies bietet die Möglichkeit, die erfindungsgemäße Vorrichtung an verschiedene Gegebenheiten anzupassen, beispielsweise an die Größe der zu verarbeitenden Fischkörper bzw. an die Fischart.

Die Aufgabe wird auch durch eine Vorrichtung zum Abtrennen des Schwanzes von kopflosen Fischkörpern gemäß Anspruch 14, umfassend eine Schneideinrichtung zum Trennen der Schwänze von den Fischkörpern, wobei der Schneideinrichtung eine Vorrichtung zum Positionieren und Ausrichten der Fischkörper nach einem der Ansprüche 1 bis 13 vorgeschaltet ist, gelöst.

Weitere bevorzugte oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Die Zeichnung zeigt:
- Fig. 1: eine perspektivische Ansicht der erfindungsgemäßen Vorrichtung zum Positionieren und Ausrichten von Fischkörpern sowie der erfindungsgemäßen Vorrichtung zum Abtrennen des Schwanzes von kopflosen Fischkörpern,
- Fig. 2: eine Explosionsdarstellung der erfindungsgemäßen Positioniereinrichtung gemäß einer ersten vorteilhaften Ausführungsform und
- Fig. 3: eine Explosionsdarstellung der erfindungsgemäßen Positioniereinrichtung gemäß einer zweiten vorteilhaften Ausführungsform.

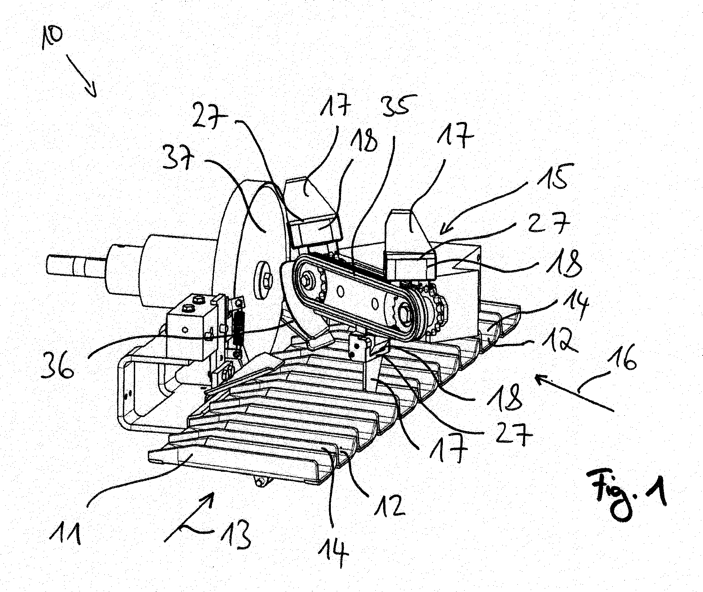

Figur 1 zeigt die erfindungsgemäße Vorrichtung 10 zum Positionieren und Ausrichten von Fischkörpern in perspektivischer Ansicht. Die Vorrichtung 10 umfasst eine Fördereinrichtung 11 mit muldenförmigen Aufnahmeelementen 12. Die Aufnahmeelemente 12 sind zur Einzelaufnahme jeweils eines der - in der Zeichnung nicht gezeigten - Fischkörper ausgebildet und eingerichtet. Mittels der Aufnahmeelemente 12 werden die Fischkörper quer zu ihrer Längsachse in eine Förderrichtung 13 gefördert. Vorzugsweise ist die Fördereinrichtung 11 als Endlosförderer mit einer Vielzahl endlos umlaufender muldenförmiger Aufnahmeelemente 12 ausgebildet. Die Aufnahmeelemente 12 sind vorzugsweise an die Geometrie zu fördernder Fischkörper derart angepasst, dass die Fischkörper seitlich, d.h. quer zu der Förderrichtung 13 durch Seitenwände 14 geführt und in Position gehalten werden, so dass die Fischkörper jeweils innerhalb einer der muldenförmigen Aufnahmeelemente 12 in ihrer Querrichtung relativ zum muldenförmigen Aufnahmeelemente 12 geführt sind, während die Fischkörper in der Längsrichtung verschiebbar in den muldenförmigen Aufnahmeelementen 12 liegen.

Mittels einer Positioniereinrichtung 15 werden die Fischkörper in eine Verschieberichtung 16 verschoben und so in den muldenförmigen Aufnahmeelementen 12 positioniert. Die Verschieberichtung 16 verläuft quer zu der Förderrichtung 13. Vorzugsweise schließen die Verschiebrichtung 16 und die Förderrichtung 13 einen Winkel von 90° ein. Weiter bevorzugt ist der Winkel zwischen der Verschieberichtung 16 und der Förderrichtung 13 größer 0° und kleiner als 90°.

Die Positioniereinrichtung 15 umfasst ein Schiebeelement 17 zum Verschieben der Fischkörper. Das Schiebeelement 17 ist an einer Schiebeelementaufnahme 18 um wenigstens eine Achse aus einer Ruhelage schwenkbar angeordnet ist. Die Ruhelage bezeichnet dabei die Position des Schiebeelements 17 relativ zu der Schiebeelementaufnahme 18, in der das Schiebeelement 17 einen Zustand einnimmt, in dem auf den freien Schenkel des Schiebeelements 17 keine äußeren Kräfte einwirken.

Des Weiteren ist die Schiebeelementaufnahme 18 in der Verschieberichtung bewegbar ausgebildet und eingerichtet ist, so dass das Schiebeelement 17 mittels der Schiebeelementaufnahme 18 einerseits in die Verschieberichtung 16 verschiebbar und andererseits um die genannte Achse bzw. die genannten Achsen schwenkbar angeordnet ist.

Weiter bevorzugt umfasst die Positioniereinrichtung 15 magnetische Rückstellmittel. Die magnetischen Rückstellmittel sind vorzugsweise derart ausgebildet, dass diese beim Verschieben des Fischkörpers eine in die Verschieberichtung 16 wirkende Rückstellkraft auf das Schiebeelement 17 ausüben. Mit anderen Worten sind die magnetischen Rückstellmittel derart eingerichtet, dass ein Kontakt des Schiebelements 17 mit einem Fischkörper mittels der Rückstellkraft einer Schwenkbewegung des Schiebeelements 17 entgegengewirkt wird.

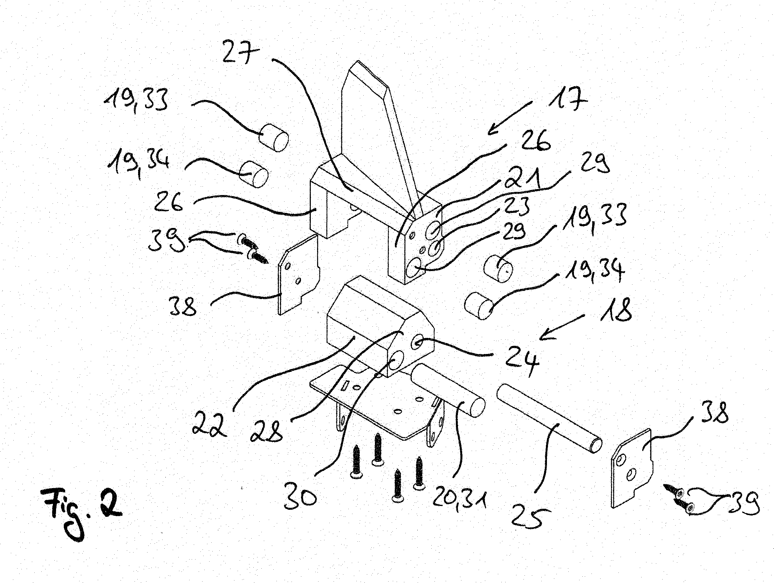

Wie anhand der Explosionsdarstellung der erfindungsgemäßen Positioniereinrichtung 15 gemäß einer ersten vorteilhaften Ausführungsform in Figur 2 gezeigt, umfassen die magnetischen Rückstellmittel mindestens ein erstes magnetisches Element 19. Das magnetische Element 19 ist bevorzugt an dem Schiebeelement 17 angeordnet. Weiter umfassen die magnetischen Rückstellmittel ein zweites magnetisches Element 20, das an der Schiebeelementaufnahme 18 angeordnet ist. Die ersten und zweiten magnetischen Elemente 19, 20 sind jeweils derart angeordnet, dass sich in der Ruhelage des Schiebeelements 17 jeweils ungleichnamige Pole des ersten magnetischen Elements 19 und des zweiten magnetischen Elements 20 berührungsfrei zumindest im Wesentlichen gegenüberstehen. So steht beispielsweise ein Nordpol des ersten magnetischen Elements 19 einem Südpol des zweiten magnetischen Elements 20 oder umgekehrt gegenüber. Die vorgenannten magnetischen Pole bzw. die sich gegenüberstehenden Polflächen sind dabei voneinander beabstandet angeordnet, so dass sich diese berührungsfrei gegenüberstehen. Die ersten und zweiten magnetischen Elemente 19, 20 sind entweder so angeordnet, dass die Längsachsen des ersten magnetischen Elements 19 sowie des zweiten magnetischen Elements 20 deckungsgleich aufeinander fallen. Alternativ sind die ersten und zweiten magnetischen Elemente 19, 20 versetzt zueinander angeordnet, so dass die jeweiligen Längsachsen nicht deckungsgleich, jedoch parallel zueinander verlaufen.

Vorzugsweise umfasst das Schiebeelement 17 ein erstes Lagerelement 21, während die Schiebeelementaufnahme 18 ein zweites Lagerelement 22 umfasst. Die ersten und zweiten Lagerelemente 21, 22 weisen jeweils Ausnehmungen 23, 24 zur Aufnahme einer Schwenkachse 25 auf. Mittels der Schwenkachse 25 sind das ersten Lagerelement 21 und das zweite Lagerelemente 22 um die wenigstens eine Achse schwenkbar angeordnet.

Weiter bevorzugt ist das erste Lagerelement 21 zumindest im Wesentlichen als U-Profil ausgebildet und umfasst zwei Seitenteile 26 und ein Basisteil 27. Vorteilhafter Weise umgreifen die Seitenteile 26 jeweils das zweite Lagerelement 22 an dessen Seitenflächen 28 zumindest teilweise. Besonders bevorzugt ist das zweite Lagerelement 22 als Vollkörper ausgebildet, während das U-Profil des ersten Lagerelements 21 diesen seitlich umgreift. Alternativ ist auch das zweite Lagerelement 22 u-profilförmig ausgebildet.

Vorzugsweise umfasst mindestens eines der Seitenteile 26 des ersten Lagerelements 21 eine erste Aufnahme 29 zur Aufnahme des ersten magnetischen Elements 19. Die erste Aufnahme 29 ist vorzugsweise als Ausnehmung in dem Seitenteil 26 ausgebildet. Alternativ ist die Aufnahme 29 eine Bohrung. Als die Aufnahme 29 ist grundsätzlich jedes Mittel geeignet, dass eine dauerhafte Verbindung zu dem ersten magnetischen Element 19 herstellt. Die Aufnahme 29 kann daher auch derart ausgebildet sein, dass das erste magnetische Element 19 mittels kraft-, stoff- oder formschlüssiger Verbindung an diesem angeordnet ist.

Vorteilhafter Weise umfasst das erste magnetische Element mindestens einen ersten Stabmagneten 33, der mit seiner längsten Symmetrieachse parallel zu der Schwenkachse 25 ausgerichtet angeordnet ist. Die längste Symmetrieachse des ersten Stabmagneten 33 ist dabei diejenige Achse, die auf kürzestem Weg durch den magnetischen Nord- und Südpol des ersten Stabmagneten verläuft.

Besonders bevorzugt umfasst das zweite Lagerelement 22 mindestens eine zweite Aufnahme 30 zur Aufnahme des zweiten magnetischen Elements 20. Das zweite magnetische Element 20 umfasst ferner einen zweiten Stabmagneten 31, der mit seiner längsten Symmetrieachse parallel zu der Schwenkachse 25 ausgerichtet angeordnet ist.

Vorteilhafterweise erstreckt sich der zweite Stabmagnet 31 zumindest im Wesentlichen über die Breite des zweiten Lagerelements 22 von einer der Seitenflächen 28 zu der jeweils anderen der Seitenflächen 28. Anders ausgedrückt entspricht die Länge des zweiten Stabmagneten 31 im Wesentlichen der Breite des zweiten Lagerelements 22. Vorzugsweise bilden die Enden des zweiten Stabmagneten 31 mit den Seitenflächen 28 jeweils eine ebene Fläche.

Weiter bevorzugt umfasst jedes der Seitenteile 26 des ersten Lagerelements 21 die ersten Aufnahmen 29 zur Aufnahme jeweils der ersten magnetischen Elemente 19, wobei die ersten magnetischen Elemente 19 jeweils die ersten Stabmagnete 33, 34 umfassen, die jeweils mit ihrer längsten Symmetrieachse parallel zu der Schwenkachse 25 ausgerichtet angeordnet sind.

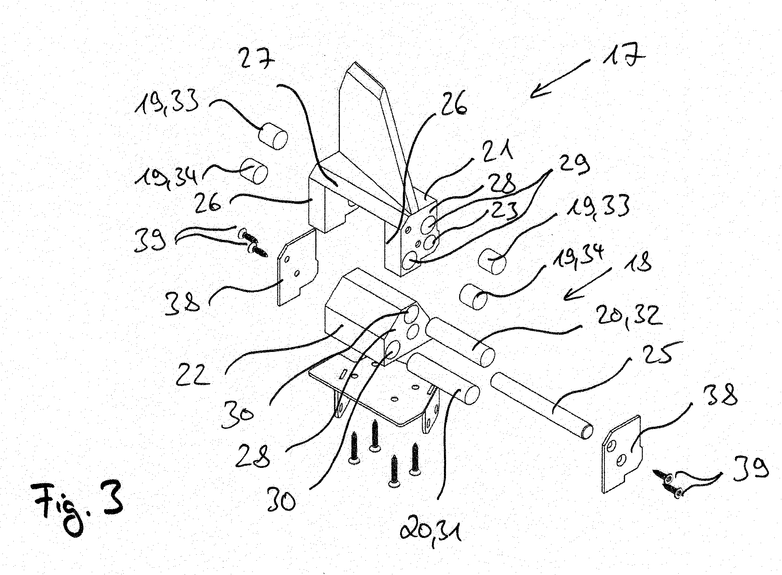

Die Figur 3 zeigt eine Explosionsdarstellung der erfindungsgemäßen Positioniereinrichtung gemäß einer zweiten vorteilhaften Ausführungsform.

Vorteilhafter Weise umfasst das zweite magnetische Element 20 zwei gegenpolig ausgerichtete zweite Stabmagnete 31, 32. Die zweiten Stabmagnete 31, 32 sind mittels der zweiten Aufnahmen 30 des zweiten Lagerelements 22 mit ihrer längsten Symmetrieachse parallel zu der Schwenkachse 25 ausgerichtet angeordnet. Weiter sind die ersten Aufnahmen 29 der ersten Lagerelemente 21 zur Aufnahme von jeweils zwei der ersten Stabmagnete 33, 34 in jedem der Seitenteile 26 derart eingerichtet, dass jedem der gegenpolig ausgerichteten Stabmagnete 31, 32 an jeder der Seitenflächen 28 jeweils zwei der ersten Stabmagnete 33, 34 berührungsfrei zumindest im Wesentlichen gegenüberstehen.

Die gegenpolige Ausrichtung der zweiten Stabmagnete 31, 32 in Kombination mit den an jeder der Seitenflächen 28 jeweils angeordneten ersten Stabmagnete 33, 34 wirkt sich besonders vorteilhaft auf die Größe der in Verschieberichtung wirkenden Rückstellkraft auf das Schiebeelement 17 aus. Zum besseren Verständnis wird die Funktionsweise im Folgenden zunächst im Bereich eines der Seitenteile 26 beschrieben. Für den Bereich des jeweils anderen Seitenteils 26 gelten die folgenden Ausführungen in analoger Weise, jedoch mit entsprechend vertauschten Nord- bzw. Südpolen.

Sind beispielsweise die beiden zweiten Stabmagnete 31, 32 derart angeordnet, dass an der in Figur 3 gezeigten rechten Seitenfläche 28 der magnetische Südpol des zweiten Stabmagneten 31 sowie der magnetische Nordpol des zweiten Stabmagneten 32 liegen, so ist der erste Stabmagnet 33 mit seinem Südpol gegenüberliegend zu dem zweiten Stabmagneten 32 und der erste Stabmagnet 34 mit seinem Nordpol gegenüberliegend zu dem zweiten Stabmagnet 31 angeordnet. Aufgrund dieser Anordnung wirkt zwischen dem ersten Stabmagnet 33 und dem zweiten Stabmagnet 32 sowie zwischen dem ersten Stabmagnet 34 und dem zweiten Stabmagnet 31 in der Ruhelage des Schiebeelements 17 jeweils eine anziehende Kraft, die im Ergebnis zu der genannten Rückstellkraft führt.

Beim Schwenken des Schiebeelements um die Schwenkachse 25 vergrößert sich der räumliche Abstand zwischen den ersten Stabmagneten 33, 34 und den zweiten Stabmagneten 31, 32 jeweils zunächst, so dass mit zunehmender Auslenkung des Schiebeelements aus der Ruhelage die Rückstellkraft abnimmt. Die Rückstellkraft nimmt nun bis zu einer vorgegebenen Auslenkung des Schiebeelements 17 aus der Ruhelage ab und erreicht bei dieser vorgegebenen Auslenkung ein Minimum. Ein weitergehendes Schwenken des Schiebeelements 17 über diese vorgegebenen Auslenkung hinaus, führt im Folgenden zu einem Anstieg der Größe der Rückstellkraft, da sich nun jeweils der Südpol des ersten Stabmagneten 33 dem Südpol des zweiten Stabmagneten 31 sowie der Nordpol des ersten Stabmagneten 34 dem Nordpol des zweiten Stabmagneten 32 annähert. Diese Annäherung gleichnamiger magnetischer Pole bewirkt eine abstoßende Kraft zwischen den jeweiligen Stabmagneten 31, 32, 33, 34, so dass im Ergebnis die Rückstellkraft wieder zunimmt. Der zuvor beschriebene Verlauf der Rückstellkraft in Abhängigkeit der Auslenkung des Schiebeelements 17 bietet den Vorteil, dass während des Positioniervorgangs des Fischkörpers das Schiebeelement 17 durch die Rückstellkraft im Wesentlichen in der Ruhelage gehalten wird. Erreicht der Fischkörper seine vorgesehene Endlage weicht das Schiebeelement 17 durch Schwenken entgegen der Verschieberichtung 16 aus. Aufgrund der mit zunehmender Auslenkung abnehmenden Rückstellkraft kann das Schiebeelement 17 über den Fischkörper gleiten. Erst bei einer noch weitergehenden Auslenkung des Schiebeelements 17 aus der Ruhelage nimmt die Rückstellkraft wieder zu, was eine möglichst rasche Rückstellung des Schiebeelements 17 nach erfolgten großen Schwenkbewegungen zurück in die Ruhelage begünstigt.

Vorzugsweise sind die nach außen gerichteten Flächen der Seitenteile 26 mit Abdeckelementen 38 abgedeckt. Die Abdeckelemente 38 dienen insbesondere der Befestigung des ersten magnetischen Elements 19 bzw. der ersten und zweiten Stabmagnete 31, 32, 33, 34. Die Abdeckelemente 38 sind vorteilhafterweise mittels Schrauben 39 an den Seitenteilen 26 verschraubt. Die Abdeckelemente 38 können jedoch alternativ auch mit jeder anderen bekannten Befestigung angeordnet sein.

Wie in der Figur 1 gezeigt, umfasst die erfindungsgemäße Vorrichtung vorteilhafter Weise einen oberhalb der Fördereinrichtung 11 angeordneten Endlosförderer 35. An dem Endlosförderer 35 ist mindestens eine der Schiebeelementaufnahmen 18 angeordnet, wobei der Endlosförderer 35 zum Verschieben der mindestens einen Schiebeelementaufnahme 18 in die Verschieberichtung 16 ausgebildet und eingerichtet ist. Der Endlosförderer 35 ist vorteilhafter Weise ausgebildet, die Schiebeelementaufnahmen 18 mit dem jeweiligen Schiebeelement 17 kontinuierlich zu fördern.

Vorzugsweise ist der Endlosförderer 35 gegenüber der Förderrichtung 13 unter Schrägstellung mit einem Vorhaltewinkel größer 0° und kleiner 90° zwischen der Verschieberichtung 16 und der Förderrichtung 13 angeordnet. Bevorzugt ist die Transportgeschwindigkeit des Endlosförderers 35 so gewählt, dass die Geschwindigkeitskomponente der Schiebeelementaufnahmen 18 bzw. der Schiebeelemente 17 in der Förderrichtung 13 der Fördergeschwindigkeit der Fördereinrichtung 11 entspricht, so dass das Schiebeelement 17 und das jeweilige der muldenförmigen Aufnahmeelemente 12 bezüglich der Förderrichtung 13 relativ zu einander ruhen.

Gemäß einer weiter bevorzugten Ausführung der Erfindung ist an dem Endlosförderer 35 ein Anschlags- und Führungselement 36 angeordnet ist, dass derart ausgebildet und eingerichtet ist, dass das Schiebeelement 17 an einer vorgegebenen Endposition unter Zwangsführung aus der Ruhelage oder der Schiebestellung in eine Umlenkstellung geschwenkt wird. Anders ausgedrückt ist das Anschlags- und Führungselement 36 derart angeordnet, dass die Schiebeelemente 17 beim Erreichen der vorgegebenen Endposition entgegen der Verschieberichtung 16 geschwenkt werden, so dass diese beim Umlenken durch den Endlosförderer 35 möglichst weit aus der Ruhelage ausgelenkt sind. Weiter ist das Anschlags- und Führungselement 36 ausgebildet und eingerichtet, eine andernfalls mögliche Kollision des Schiebeelements 17 mit einer Schneideinrichtung 37 zur Bearbeitung der Fischkörper zuverlässig zu verhindern.

Vorteilhafter Weise ist der Abstand zwischen dem Anschlags- und Führungselement 36 zur Einstellung der vorgegebenen Endposition variabel einstellbar ausgebildet. Das Anschlags- und Führungselement ist also zumindest in der Verschieberichtung in unterschiedlichen Positionen anordenbar eingerichtet.

Die Figur 1 zeigt weiter die erfindungsgemäße Vorrichtung zum Abtrennen des Schwanzes von kopflosen Fischkörpern mit der Schneideinrichtung 37, die zum Trennen der Schwänze von den Fischkörpern ausgebildet und eingerichtet ist. Die Schneideinrichtung 37 ist beispielsweise als Kreismesser ausgebildet.

Der Schneideinrichtung 37 ist die erfindungsgemäße Vorrichtung zum Positionieren und Ausrichten der Fischkörper mit den zuvor beschriebenen Merkmalen gemäß einem der Ansprüche 1 bis 14 vorgeschaltet.

## Patentansprüche

1. Vorrichtung (10) zum Positionieren und Ausrichten von Fischkörpern, umfassend
eine Fördereinrichtung (11) mit muldenförmigen Aufnahmeelementen (12) zur Einzelaufnahme jeweils eines der Fischkörper und zum Fördern der Fischkörper quer zu ihrer Längsachse in eine Förderrichtung (13),
mindestens eine zum Positionieren mittels Verschieben der Fischkörper in eine Verschieberichtung (16) eingerichtete Positioniereinrichtung (15), wobei die Verschieberichtung (16) quer zu der Förderrichtung (13) verläuft,
wobei die Positioniereinrichtung (15) ein Schiebeelement (17) zum Verschieben der Fischkörper und eine Schiebeelementaufnahme (18) umfasst, wobei das Schiebeelement (17) an der Schiebeelementaufnahme (18) um wenigstens eine Achse aus einer Ruhelage schwenkbar angeordnet ist, und wobei die Schiebeelementaufnahme (18) in der Verschieberichtung (16) bewegbar ausgebildet und eingerichtet ist,
**dadurch gekennzeichnet, dass**
die Positioniereinrichtung (15) magnetische Rückstellmittel umfasst, die derart eingerichtet und ausgebildet sind, dass diese beim Verschieben des Fischkörpers eine in die Verschieberichtung (16) wirkende Rückstellkraft auf das Schiebeelement (17) ausüben.

2. Vorrichtung nach Anspruch 1, **dadurch gekennzeichnet, dass** die magnetischen Rückstellmittel mindestens ein erstes magnetisches Element (19) und ein zweites magnetisches Element (20) umfassen, wobei das erste magnetische Element (19) an dem Schiebeelement (17) und das zweite magnetische Element (20) an der Schiebeelementaufnahme (18) derart angeordnet sind, dass sich in der Ruhelage jeweils ungleichnamige Pole des ersten magnetischen Elements (19) und des zweiten magnetischen Elements (20) berührungsfrei zumindest im Wesentlichen gegenüberstehen.

3. Vorrichtung nach einem der Ansprüche 1 bis 2, **dadurch gekennzeichnet, dass** das Schiebeelement (17) ein erstes Lagerelement (21) umfasst und die Schiebeelementaufnahme (18) ein zweites Lagerelement (22) umfasst, wobei die Lagerelemente (21, 22) jeweils Ausnehmungen (23, 24) zur Aufnahme einer Schwenkachse (25) umfassen, mittels derer die ersten und zweiten Lagerelemente (21, 22) um die wenigstens eine Achse schwenkbar angeordnet sind.

4. Vorrichtung nach Anspruch 3, **dadurch gekennzeichnet, dass** das erste Lagerelement (21) zumindest im Wesentlichen als U-Profil mit zwei Seitenteilen (26) und einem Basisteil (27) ausgebildet ist, wobei die Seitenteile (26) jeweils das zweite Lagerelement (22) an dessen Seitenflächen (28) zumindest teilweise umgreifen.

5. Vorrichtung nach Anspruch 4, **dadurch gekennzeichnet, dass** mindestens eines der Seitenteile (26) mindestens eine erste Aufnahme (29) zur Aufnahme des ersten magnetischen Elements (19) umfasst, wobei das erste magnetische Element (19) mindestens einen ersten Stabmagneten (33) umfasst, der mit seiner längsten Symmetrieachse parallel zu der Schwenkachse (25) ausgerichtet angeordnet ist.

6. Vorrichtung nach einem der Ansprüche 3 bis 5, **dadurch gekennzeichnet, dass** das zweite Lagerelement (22) mindestens eine zweite Aufnahme (30) zur Aufnahme des zweiten magnetischen Elements (20) umfasst, wobei das zweite magnetische Element (20) einen zweiten Stabmagneten (31) umfasst, der mit seiner längsten Symmetrieachse parallel zu der Schwenkachse (25) ausgerichtet angeordnet ist.

7. Vorrichtung nach Anspruch 6, **dadurch gekennzeichnet, dass** der zweite Stabmagnet (31) sich zumindest im Wesentlichen über die Breite des zweiten Lagerelements (22) von einer der Seitenflächen (28) zu der jeweils anderen der Seitenflächen (28) erstreckt.

8. Vorrichtung nach einem der Ansprüche 5 bis 7, **dadurch gekennzeichnet, dass** jedes der Seitenteile (26) des ersten Lagerelements (21) die ersten Aufnahmen (29) zur Aufnahme jeweils der ersten magnetischen Elemente (19) umfassen, wobei die ersten magnetischen Elemente (19) jeweils die ersten Stabmagnete (33) umfassen, die jeweils mit ihrer längsten Symmetrieachse parallel zu der Schwenkachse (25) ausgerichtet angeordnet sind.

9. Vorrichtung nach Anspruch 8, **dadurch gekennzeichnet, dass** das zweite magnetische Element (19) zwei gegenpolig ausgerichtete zweite Stabmagnete (31, 32) umfasst, die mittels der zweiten Aufnahmen (30) des zweiten Lagerelements (22) mit ihrer längsten Symmetrieachse parallel zu der Schwenkachse (25) ausgerichtet angeordnet sind, wobei die ersten Aufnahmen (29) der ersten Lagerelemente (21) zur Aufnahme von jeweils zwei der ersten Stabmagnete (33, 34) in jedem der Seitenteile (26) derart eingerichtet sind, dass jedem der gegenpolig ausgerichteten Stabmagnete (31, 32) an jeder der Seitenflächen (28) jeweils zwei der ersten Stabmagnete (33, 34) berührungsfrei zumindest im Wesentlichen gegenüberstehen.

10. Vorrichtung nach einem der Ansprüche 1 bis 9 ferner umfassend einen oberhalb der Fördereinrichtung (11) angeordneten Endlosförderer (35), wobei an dem Endlosförderer (35) mindestens eine der Schiebeelementaufnahmen (18) angeordnet ist und der Endlosförderer (35) zum Verschieben der mindestens einen Schiebeelementaufnahme (18) in die Verschieberichtung (16) ausgebildet und eingerichtet ist.

11. Vorrichtung nach Anspruch 10, **dadurch gekennzeichnet, dass** der Endlosförderer (35) gegenüber der Förderrichtung (13) unter Schrägstellung mit einem Vorhaltewinkel größer 0° und kleiner 90° zwischen der Verschieberichtung (16) und der Förderrichtung (13) angeordnet ist.

12. Vorrichtung nach einem der Ansprüche 10 oder 11, **dadurch gekennzeichnet, dass** an dem Endlosförderer (35) ein Anschlags- und Führungselement (36) angeordnet ist, dass derart ausgebildet und eingerichtet ist, dass das Schiebeelement (17) an einer vorgegebenen Endposition unter Zwangsführung aus der Ruhelage oder der Schiebestellung in eine Umlenkstellung geschwenkt wird.

13. Vorrichtung nach Anspruch 12, **dadurch gekennzeichnet** das der Abstand zwischen dem Anschlags- und Führungselement (36) zur Einstellung der vorgegebenen Endposition variabel einstellbar ausgebildet ist.

14. Vorrichtung zum Abtrennen des Schwanzes von kopflosen Fischkörpern, umfassend eine Schneideinrichtung (37) zum Trennen der Schwänze von den Fischkörpern, sowie eine Vorrichtung (10) zum Positionieren und Ausrichten der Fischkörper nach einem der Ansprüche 1 bis 13, die der Schneideinrichtung (37) vorgeschaltet ist.

## Claims

1. Apparatus (10) for positioning and orienting fish bodies, comprising
a conveying device (11) with trough-shaped receiving elements (12) for individually receiving one each of the fish bodies and for conveying the fish bodies transversely to their longitudinal axis in a conveying direction (13),
at least one positioning device (15), which is configured to position the fish bodies by displacing them in a displacement direction (16), wherein the displacement direction (16) runs transversely to the conveying direction (13),
wherein the positioning device (15) comprises a sliding element (17) for displacing the fish bodies and a sliding element receptacle (18), wherein the sliding element (17) is arranged on the sliding element receptacle (18) so as to be pivotable out of a rest position about at least one axis, and wherein the sliding element receptacle (18) is designed and configured to be movable in the displacement direction (16),
**characterised in that**
the positioning device (15) comprises magnetic reset means which are designed and configured in such a manner that, during displacement of the fish body, they exert a restoring force on the sliding element (17) acting in the displacement direction (16).

2. Apparatus according to claim 1, **characterised in that** the magnetic reset means comprise at least a first magnetic element (19) and a second magnetic element (20), wherein said first magnetic element (19) is arranged on the sliding element (17) and said second magnetic element (20) is arranged on the sliding element receptacle (18) in such a way that, in the rest position, unlike poles of the first magnetic element (19) and the second magnetic element (20) are each at least substantially opposite each other without touching.

3. Apparatus according to any one of claims 1 to 2, **characterised in that** the sliding element (17) comprises a first bearing element (21) and the sliding element receptacle (18) comprises a second bearing element (22), wherein the bearing elements (21, 22) each comprise recesses (23, 24) for receiving a pivot axle (25) by means of which the first and second bearing elements (21, 22) are arranged so as to be pivotable about the at least one axis.

4. Apparatus according to claim 3, **characterised in that** the first bearing element (21) is designed at least substantially as a U-shaped profile with two side parts (26) and a base part (27), wherein the side parts (26) each encompass the second bearing element (22) at least partially on its side surfaces (28).

5. Apparatus according to claim 4, **characterised in that** at least one of the side parts (26) comprises at least one first receptacle (29) for receiving the first magnetic element (19), wherein the first magnetic element (19) comprises at least one first rod magnet (33) which is arranged with its longest symmetry axis aligned parallel to the pivot axle (25).

6. Apparatus according to any one of claims 3 to 5, **characterised in that** the second bearing element (22) comprises at least one second receptacle (30) for receiving the second magnetic element (20), wherein the second magnetic element (20) comprises at least one second rod magnet (31) which is arranged with its longest symmetry axis aligned parallel to the pivot axle (25).

7. Apparatus according to claim 6, **characterised in that** the second rod magnet (31) extends at least substantially over the width of the second bearing element (22) from one of the side surfaces (28) to the respective other of the side surfaces (28).

8. Apparatus according to any one of claims 5 to 7, **characterised in that** each of the side parts (26) of the first bearing element (21) comprises the first receptacles (29) for receiving each of the first magnetic elements (19), wherein the first magnetic elements (19) comprise each first rod magnets (33) which are each arranged with their longest symmetry axis aligned parallel to the pivot axle (25).

9. Apparatus according to claim 8, **characterised in that** the second magnetic element (19) comprises two second rod magnets (31, 32) aligned with opposing poles which, by means of the second receptacles (30) of the second bearing element (22), are arranged with their longest symmetry axis aligned parallel to the pivot axle (25), wherein the first receptacles (29) of the first bearing elements (21) are configured in such a way for receiving two each of the first rod magnets (33, 34) in each of the side parts (26) that each of the rod magnets (31, 32), aligned with opposing poles on each of the side surfaces (28), are at least substantially opposed by two each of the first rod magnets (33, 34) without touching.

10. Apparatus according to any one of claims 1 to 9, further comprising an endless conveyor (35) arranged above the conveying device (11), wherein at least one of the sliding element receptacles (18) is arranged on the endless conveyor (35) and the endless conveyor (35) is designed and configured to displace the at least one sliding element receptacle (18) in the displacement direction (16).

11. Apparatus according to claim 10, **characterised in that**, in relation to the conveying direction (13), the endless conveyor (35) is arranged between the displacement direction (16) and the conveying direction (13) in an inclined position with a lead angle greater than 0° and less than 90°.

12. Apparatus according to one of claims 10 or 11, **characterised in that** an abutment and guiding element (36) is arranged on the endless conveyor (35), said abutment and guiding element being designed and configured in such a manner that, at a predetermined end position, the sliding element (17) is pivoted under restricted guidance out of the rest position or the sliding position into a deflecting position.

13. Apparatus according to claim 12, **characterised in that** the distance between the abutment and guiding element (36) is designed to be variably adjustable for adjusting the predetermined end position.

14. Apparatus for cutting off the tail of headless fish bodies, comprising a cutting device (37) for severing the tails from the fish bodies, and an apparatus (10) for positioning and orienting the fish bodies according to any one of claims 1 to 13 which is arranged upstream of the cutting device (37).

## Revendications

1. Dispositif (10) de positionnement et d'alignement de corps de poissons, comprenant
un dispositif de transport (11) comportant des éléments de réception en forme d'auge (12) pour la réception individuelle de respectivement un des corps de poissons et pour le transport des corps de poissons transversalement à leur axe longitudinal dans une direction de transport (13),
au moins un dispositif de positionnement (15) installé pour le positionnement par déplacement des corps de poissons dans une direction de déplacement (16), dans lequel la direction de déplacement (16) s'étend transversalement à la direction de transport (13),
dans lequel le dispositif de positionnement (15) comprend un élément de glissement (17) pour faire glisser les corps de poissons et un logement d'élément de glissement (18), l'élément de glissement (17) étant agencé au niveau du logement d'élément de glissement (18) de façon à pouvoir pivoter autour d'au moins un axe hors d'une position de repos, et dans lequel le logement d'élément de glissement (18) est réalisé et aménagé mobile dans la direction de déplacement (16),
**caractérisé en ce que**
le dispositif de positionnement (15) comprend des moyens de rappel magnétiques, qui sont aménagés et réalisés de telle sorte qu'ils exercent sur l'élément de glissement (17), lors du déplacement du corps de poisson, une force de rappel agissant dans la direction de déplacement (16).

2. Dispositif selon la revendication 1, **caractérisé en ce que** les moyens de rappel magnétiques comprennent au moins un premier élément magnétique (19) et un deuxième élément magnétique (20), où le premier élément magnétique (19) est agencé au niveau de l'élément de glissement (17) et le deuxième élément magnétique (20) est agencé au niveau du logement d'élément de glissement (18) de telle sorte que des pôles respectivement opposés du premier élément magnétique (19) et du deuxième élément magnétique (20) au moins sensiblement se font face sans contact dans la position de repos.

3. Dispositif selon l'une quelconque des revendications 1 à 2, **caractérisé en ce que** l'élément de glissement (17) comprend un premier élément de palier (21) et le logement d'élément de glissement (18) comprend un deuxième élément de palier (22), où les éléments de palier (21, 22) comprennent respectivement des évidements (23, 24) permettant la réception d'un axe de pivotement (25), au moyen duquel les premier et deuxième éléments de palier (21, 22) sont agencés de façon à pouvoir pivoter autour de l'axe, au moins au nombre de un.

4. Dispositif selon la revendication 3, **caractérisé en ce que** le premier élément de palier (21) est réalisé au moins sensiblement en tant que profil en U comportant deux parties latérales (26) et une partie de base (27), les parties latérales (26) entourant au moins partiellement respectivement le deuxième élément de palier (22) au niveau de ses surfaces latérales (28).

5. Dispositif selon la revendication 4, **caractérisé en ce qu'**au moins une des parties latérales (26) comprend au moins un premier logement (29) permettant la réception du premier élément magnétique (19), le premier élément magnétique (19) comprenant au moins une première barre magnétique (33) qui est agencée alignée, avec son axe de symétrie le plus long parallèle à l'axe de pivotement (25).

6. Dispositif selon l'une des revendications 3 à 5, **caractérisé en ce que** le deuxième élément de palier (22) comprend au moins un deuxième logement (30) permettant la réception du deuxième élément magnétique (20), le deuxième élément magnétique (20) comprenant une deuxième barre magnétique (31) qui est agencée alignée, avec son axe de symétrie le plus long parallèle à l'axe de pivotement (25).

7. Dispositif selon la revendication 6, **caractérisé en ce que** la deuxième barre magnétique (31) s'étend au moins sensiblement sur la largeur du deuxième élément de palier (22) depuis une des surfaces latérales (28) vers respectivement l'autre des surfaces latérales (28).

8. Dispositif selon l'une des revendications 5 à 7, **caractérisé en ce que** chacune des parties latérales (26) du premier élément de palier (21) comprend les premiers logements (29) permettant la réception de respectivement les premiers éléments magnétiques (19), les premiers éléments magnétiques (19) comprenant respectivement les premières barres magnétiques (33) qui sont agencées respectivement alignées, avec leur axe de symétrie le plus long parallèle à l'axe de pivotement (25).

9. Dispositif selon la revendication 8, **caractérisé en ce que** le deuxième élément magnétique (19) comprend deux deuxièmes barres magnétiques (31, 32) orientées à polarité opposée, qui sont agencées alignées, avec leur axe de symétrie le plus long parallèle à l'axe de pivotement (25), au moyen des deuxièmes logements (30) du deuxième élément de palier (22), où les premiers logements (29) des premiers éléments de palier (21) sont aménagés pour la réception de respectivement deux des premières barres magnétiques (33, 34) dans chacune des parties latérales (26), de sorte que respectivement deux des premières barres magnétiques (33, 34) au moins sensiblement font face sans contact à chacune des barres magnétiques (31, 32) orientées à polarité opposée au niveau de chacune des surfaces latérales (28).

10. Dispositif selon l'une des revendications 1 à 9 comprenant en outre un transporteur sans fin (35) agencé au-dessus du dispositif de transport (11), dans lequel au moins un des logements d'élément de glissement (18) est agencé au niveau du transporteur sans fin (35) et le transporteur sans fin (35) est réalisé et aménagé pour déplacer le logement d'élément de glissement (18), au moins au nombre de un, dans la direction de déplacement (16).

11. Dispositif selon la revendication 10, **caractérisé en ce que** le transporteur sans fin (35) est agencé par rapport à la direction de transport (13) en position inclinée avec un angle de dérive supérieur à 0° et inférieur à 90° entre le dispositif de déplacement (16) et la direction de transport (13).

12. Dispositif selon l'une quelconque des revendications 10 ou 11, **caractérisé en ce qu'**est agencé au niveau du transporteur sans fin (35) un élément de butée et de guidage (36) qui est réalisé et aménagé de telle sorte que l'élément de glissement (17) est basculé au niveau d'une position finale prédéfinie par guidage forcé hors de la position de repos ou de la position de déplacement dans une position de renvoi.

13. Dispositif selon la revendication 12, **caractérisé en ce que** la distance entre l'élément de butée et de guidage (36) est conçue avec un réglable variable pour permettre le réglage de la position finale prédéfinie.

14. Dispositif de coupe de la queue de corps de poissons sans tête, comprenant un dispositif de coupe (37) destiné à couper la queue des corps de poissons ainsi qu'un dispositif (10) destiné à positionner et aligner les corps de poissons selon l'une des revendications 1 à 13, qui est intercalé en amont du dispositif de coupe (37).
